# FASCICULE DE BREVET EUROPEEN

(11) **EP 0 839 704 B1**
(45) Date de publication et mention de la délivrance du brevet: **16.01.2002**
(21) Numéro de dépôt: 97402330.1
(22) Date de dépôt: 03.10.1997
(51) Int. Cl.: B62D 25/08, B62D 25/16, B62D 29/04

(54) **Pièce-support pour éléments de carrosserie**
Trägerelement für Karrosserieteil
Support element for car body elements

(30) Priorité: 04.10.1996 FR 9612147
(43) Date de publication de la demande: 06.05.1998
(73) Titulaire: COMPAGNIE PLASTIC OMNIUM, 69007 Lyon (FR)
(72) Inventeur: Barbier, Pascal, 52200 Langres (FR); Cheron, Hugues, 75013 Paris (FR); Felgeirolle, Jean-Luc, 01100 Oyonnax (FR)
(74) Mandataire: Remy, Vincent Noel Paul

(56) Documents cités:
- EP-A- 0 494 562
- FR-A- 2 655 605
- US-A- 2 973 220
- US-A- 4 973 102

## Description

La présente invention concerne une pièce-support pour éléments de carrosserie.

On sait qu'un véhicule automobile est divisé en au moins deux compartiments, dont l'un, généralement appelé le bloc avant, contient le moteur et l'autre l'habitacle du véhicule.

A l'intérieur de chaque compartiment, des pièces-support spécifiques, montées sur le châssis du véhicule ou sur ses éléments de carrosserie, supportent divers organes.

Ainsi, dans le compartiment moteur, le long des ailes avant du véhicule, se trouvent notamment une batterie électrique, quelques réservoirs de fluides, des calculateurs électroniques et des boîtiers électriques. De même, les optiques de phares du véhicule sont logées généralement au-dessus du pare-chocs.

Par ailleurs, chaque élément de carrosserie est supporté par le châssis du véhicule, au moyen d'autres pièces-support fixées individuellement sur ledit châssis.

Or, la présence de ces nombreuses pièces-support constitue un inconvénient tant lors de la fabrication du véhicule que lors de son fonctionnement.

En effet, pour fixer individuellement chaque organe à l'intérieur d'un compartiment, on doit intervenir directement sur le châssis du véhicule, ce qui occupe plusieurs postes sur sa chaîne de montage et nuit à une réduction des coûts de fabrication et des investissements par une diminution du nombre d'opérations et du temps de montage.

De plus, le nombre important de pièces-support augmente les dispersions de fabrication et de montage, obligeant, lors de l'assemblage des éléments de carrosserie, à de nombreux réglages afin de réduire les jeux d'accostage entre ces derniers.

En outre, si, pendant son utilisation, le véhicule subit un choc contre un obstacle, la déformation du ou des éléments de carrosserie concernés et la détérioration des organes logés au voisinage de cet élément de carrosserie sont difficilement maîtrisables, d'où il résulte un problème lié au coût de la réparation nécessaire, qui peut être très élevé.

Du document FR-A-2 655 605 servant de base pour le préambule de la revendication 1, on connaît un bâti-support pour façade antérieure de véhicule automobile qui peut recevoir les ailes du véhicule et supporter notamment des blocs optiques, un pulseur d'air, un avertisseur sonore, un pare-chocs, une grille de calandre, des connecteurs de serrure.

Ce bâti-support est en outre conçu pour constituer une pièce de structure qui assure une cohésion des flancs droit et gauche du véhicule.

A cet effet, la bâti-support comporte un panneau frontal relativement plan avec deux côtés opposés approximativement verticaux et des bords opposés haut et bas approximativement horizontaux et avec une face avant et une face arrière. Sur chacun des côtés, une jambe latérale est saillante sur la face arrière en étant approximativement perpendiculaire aux panneaux et côtés. Les jambes latérales sont destinées à être réunies aux consoles et à supporter les ailes du véhicule.

Cette structure d'un seul tenant permet à ce bâti-support d'être fabriqué avec une bonne reproductibilité dimensionnelle, ses tolérances de fabrication étant assez serrées.

Ce bâti-support est destiné à être monté sur une coque-structure habituellement mécano-soudée, pour jouer son rôle de pièce de structure.

Comme dans les structures classiques de véhicules, ce bâti occupe tout l'avant du véhicule, de sorte qu'en cas de choc, il se déforme avec le reste de la structure du véhicule et ne peut pas être partiellement remplacé.

En outre, sa déformation dépassant nécessairement sa zone d'impact, les organes qu'il supporte même au délà de la zone d'impact risquent très fortement d'être endommagés.

Un tel bâti-support ne permet donc pas de réduire le coût des réparations consécutives à un choc.

La présente invention vise à résoudre ces inconvénients en proposant une pièce-support pour éléments de carrosserie qui est en outre particulièrement simple et économique.

La présente invention a pour objet une pièce-support pour élément de carrosserie, destinée à être fixée sur le châssis d'un véhicule automobile, entourant un compartiment dudit véhicule automobile, présentant, du côté du ou des éléments de carrosserie, une structure renforcée dont l'enveloppe est apte à épouser sensiblement la forme intérieure du ou des éléments de carrosserie pour les supporter et comportant, du côté du compartiment, des aménagements pour installer des organes destinés à être logés à l'intérieur dudit compartiment, qui est caractérisée par le fait qu'elle s'étend au maximum jusqu'au plan médian longitudinal vertical du véhicule.

On entend par forme intérieure d'un élément de carrosserie, la forme de sa face dirigée vers l'intérieur du véhicule, qui est opposée à la face de l'élément de carrosserie visible depuis l'extérieur du véhicule.

De préférence, la pièce-support selon l'invention est réalisée d'un seul tenant.

A défaut, ladite pièce-support est obtenue par assemblage d'un nombre minimum de sous-ensembles.

Grâce à la pièce-support de l'invention, on peut éliminer la quasi totalité des pièces-support traditionnelles utilisées lors de la fabrication d'un véhicule, tant pour supporter les éléments de carrosserie que pour maintenir les organes à l'intérieur du compartiment du véhicule.

Ainsi, lors de la fabrication d'un véhicule, on peut installer sur la pièce-support tous les organes destinés à prendre place dans le compartiment, et ce par exemple, en-dehors de la chaîne de montage du véhicule proprement dit. Il en résulte une réduction des investissements et un gain de temps sur les postes d'assemblage lors de la fabrication du véhicule.

Il suffit ensuite de mettre en place la pièce-support complètement équipée sur le châssis du véhicule et de procéder aux différents raccordements qui s'imposent.

Dans un mode de réalisation particulier, la pièce-support présente, du côté du compartiment, des aménagements qui font partie intégrante des organes logés dans ce compartiment.

Ainsi, la pièce-support peut intégrer le boîtier d'un bloc optique, la vitre de ce bloc étant solidaire de l'élément de carrosserie associé, ou encore un récipient constituant un réservoir de liquide, un boîtier de fusibles, de calculateur, de filtre à air ou la partie inférieure d'un conduit d'air.

De manière avantageuse, on regroupe les organes dans des systèmes fonctionnels tels que le système d'essuie-glace, le système d'éclairage ou les systèmes électriques et électroniques en répartissant ces systèmes dans les pièces-support, ce qui permet de limiter le nombre de câbles traversant le compartiment moteur.

Dans un mode de réalisation particulier, les éléments de carrosserie du véhicule sont délimités par les frontières des pièces-support. Ainsi, on peut mettre en place sur le châssis du véhicule chaque pièce-support qui est non seulement équipée de tous les organes intérieurs mais également revêtue de l'élément de carrosserie correspondant.

Les raccordements et mises en référence entre éléments de carrosserie adjacents sont assurés par les pièces-support qui peuvent notamment comporter des bords à surfaces d'appui inclinées qui, en cas de déplacement relatif des pièces-support à la suite d'un choc, provoquent le glissement de l'une sur l'autre afin de réduire les contraintes résultant du déplacement, dans le but de préserver les pièces-support et les éléments de carrosserie qui ne sont pas directement impactés lors du choc.

Le fait que la pièce-support selon l'invention soit réalisée d'un seul tenant ou avec un minimum de sous-ensembles présente l'avantage supplémentaire que l'on peut déterminer à l'avance la manière dont cette pièce-support se déformera en cas de choc contre un obstacle.

Ainsi, dans un mode de réalisation préféré de l'invention, la pièce-support présente un différentiel de rigidité entre différentes parties de manière qu'en cas de choc contre un obstacle, la pièce-support se déforme en maintenant les organes en permanence en retrait de l'obstacle, en absorbant l'énergie du choc dans des zones prévues à cet effet, lesquelles peuvent être réversiblement déformables ou fusibles, limitant ainsi l'intrusion de l'obstacle.

De plus, afin de sauvegarder non seulement les équipements montés sur la pièce-support de l'invention, mais également la pièce-support elle-même, on prévoit, dans un mode de réalisation particulier, de munir la pièce-support de fixations fusibles qui, en cas de choc, cèdent avant que ladite pièce-support ne se casse, ce qui permet un déplacement de la pièce-support par rapport au châssis du véhicule et une mise en contact direct dudit châssis ou d'éléments absorbants situés entre l'obstacle et le châssis avec l'obstacle.

En outre, grâce à sa structure, la pièce-support selon l'invention présente une excellente tenue mécanique et procure un appui non seulement périphérique, mais également surfacique, aux éléments de carrosserie qu'elle supporte.

Cet avantage est particulièrement intéressant pour les éléments de carrosserie réalisés en matière plastique, lesquels sont souvent boudés par le grand public en raison de leur trop grande aptitude à se déformer sous l'effet d'une faible pression exercée sur leur surface extérieure.

De préférence, la pièce-support selon l'invention est destinée à être positionnée sur un côté avant du véhicule.

Dans un mode de réalisation particulier, la pièce-support est apte à occuper un coin, notamment un coin avant, du véhicule.

Dans un premier mode de réalisation, la pièce-support s'interrompt le long du bord intérieur des optiques de phares.

Dans un deuxième mode de réalisation, la pièce-support s'étend jusqu'au plan médian longitudinal vertical du véhicule.

On peut noter qu'il est particulièrement avantageux que la pièce-support occupe l'un des coins avant du véhicule, car il est statistiquement constaté que les chocs les plus fréquents se produisent dans les coins avant des véhicules.

Ainsi, dans la majorité des cas, après un choc important, seule la pièce-support et éventuellement le ou les éléments de carrosserie associés seront à remplacer, ce qui est économiquement intéressant.

Avantageusement, la pièce-support selon l'invention comporte des moyens de liaison, rapportés ou intégrés, d'éléments de carrosserie voisins, par exemple l'aile et le pare-chocs du véhicule, de préférence au voisinage des optiques de phares du véhicule, de manière à assurer la liaison de ces deux éléments de carrosserie, ainsi que, dans certains cas, la gestion des jeux d'accostage et des dilatations différentielles entre les éléments de carrosserie.

Dans un mode de réalisation avantageux, la pièce-support selon l'invention est réalisée en matière plastique, par exemple en polypropylène chargé de fibres de verre.

D'autres matériaux peuvent être utilisés, par exemple du polyéthylène téréphtalate chargé de fibres de verre ou le matériau connu sous l'abréviation SMA (Stirene Methyl Acrylate) ou encore en polyamide.

Des matériaux synthétiques thermoplastiques ou thermodurs plus courants, ou des matériaux recyclés, renforcés de fibres minérales ou organiques, tissées ou non, peuvent également être utilisés.

Pour un même outillage de fabrication, on peut prévoir d'utiliser plusieurs matériaux différents pour réaliser la même pièce-support afin d'optimiser l'adéquation entre les exigences requises telles que la bonne tenue aux conditions climatiques dans lequel le véhicule doit être utilisé, et les considérations économiques telles que les coûts et investissements.

On peut également réaliser la pièce-support selon l'invention à partir d'une association de matériaux choisis de manière à accroître la rigidité de la pièce-support et permettre une bonne gestion des dilatations différentielles entre les éléments de carrosserie soit que ces derniers sont de natures différentes, soit qu'ils sont en matière plastique mais avec des coefficients de dilatation proches.

D'autres avantages apparaîtront à la lecture de la description qui va suivre, en plus des avantages liés au fait que la pièce-support selon l'invention est économique, légère et recyclable.

Dans le but de mieux faire comprendre l'invention, on va en décrire maintenant des modes de réalisation donnés à titre d'exemples non limitatifs en référence au dessin annexe dans lequel :
- la figure 1 est une vue en perspective d'une pièce-support avant gauche selon un premier mode de réalisation de l'invention,
- la figure 2 est une vue en perspective d'une pièce-support avant gauche selon un deuxième mode de réalisation de l'invention,
- la figure 3 est une vue en perspective d'une pièce-support avant gauche selon un troisième mode de réalisation de l'invention,

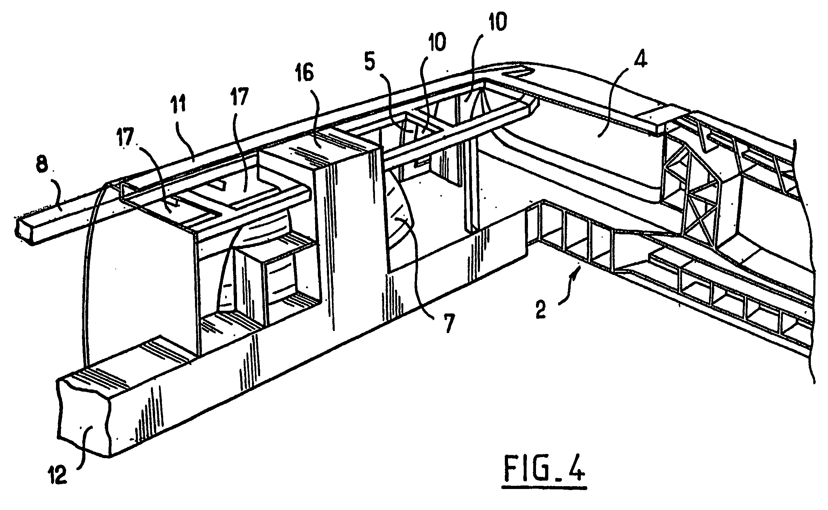

- la figure 4 est une vue en perspective de l'intérieur de la pièce-support de la figure 3,
- la figure 5a représente schématiquement en vue de dessus par rapport au véhicule, les appuis de la pièce-support de la figure 3 sur le châssis du véhicule,
- la figure 5b est une vue en coupe de la figure 5a,
- la figure 6 est une vue en perspective d'une pièce support avant gauche selon un quatrième mode de réalisation de l'invention, et
- les figures 7A,7B à 11A,11B illustrent différentes répartitions des pièces-support selon l'invention et des organes qu'elles renferment.

Les différentes exemples de réalisation qui vont être décrits se déclinent naturellement en pièces-support droites, par symétrie ou non, et peuvent supporter d'autres éléments de carrosserie et supporter ou constituer d'autres organes.

De même, les pièces-support selon l'invention peut se situer en d'autres endroits du véhicule, et notamment à l'arrière.

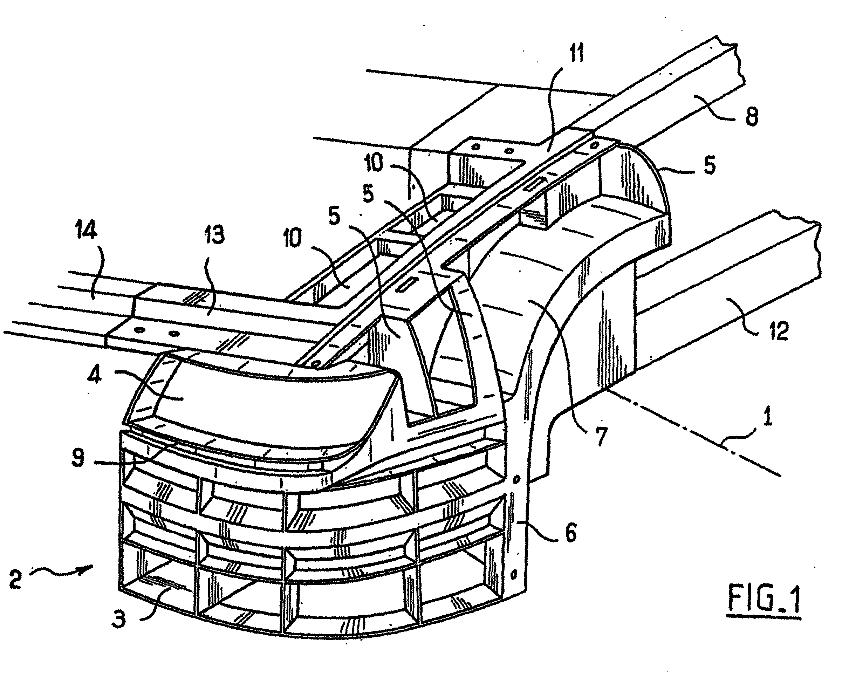

La pièce-support de la figure 1 est réalisée en matière plastique, par exemple en polypropylène chargé de fibres de verre.

Dans ce premier mode de réalisation, la pièce-support, également désignée quart-avant, s'étend depuis l'axe 1 des roues avant du véhicule, couvre le coin avant gauche du véhicule et s'interrompt le long du bord intérieur des optiques de phares du véhicule. Elle est destinée à supporter l'aile avant gauche du véhicule et une extrémité du pare-chocs (non représentés).

La pièce-support comporte une structure cloisonnée 2 à sa partie inférieure, qui constitue sa zone d'impacts correspondant à l'emplacement du pare-chocs, et derrière laquelle peuvent se trouver des éléments d'absorption d'énergie réversibles ou non, voire fusibles.

L'un des volumes 3 de cette structure cloisonnée 2 peut être utilisé comme conduit d'air, par exemple pour ventiler les freins de la roue avant.

Au-dessus de la zone d'impact 2, la pièce-support comprend un logement 4 pour les optiques de phares du véhicule et, en retrait de ce logement, des nervures 5 destinées à s'appuyer contre la face intérieure de l'aile avant du véhicule, laquelle peut être, par exemple, fixée à la pièce-support le long du bord 6 d'une partie 7 formant passage de roue de la pièce-support et le long d'un longeron supérieur 8 du châssis du véhicule.

Dans une variante non représentée, la pièce-support comporte un boîtier intégré réalisé d'un seul tenant avec elle et constituant le boîtier du bloc optique.

Juste en dessous du logement 4 pour les optiques de phares, une rainure horizontale 9 permet de réaliser l'accostage du pare-chocs et de l'aile de manière à lier ces derniers et/ou les mettre en référence l'un par rapport à l'autre.

Sur sa face intérieure, c'est-à-dire sa face dirigée vers le compartiment moteur du véhicule, la pièce-support comporte des aménagements 10 destinées à recevoir par exemple un réservoir de fluide, une batterie électrique, et d'autres organes qui sont traditionnellement fixés dans le compartiment moteur au voisinage de l'aile avant du véhicule.

Ces aménagements pourraient également constituer directement le réservoir de fluide et le boîtier de la batterie, afin d'éviter que la pièce-support ne serve que de simple enveloppe à des boîtiers alors qu'elle peut elle-même directement constituer ces boîtiers.

Il en résulte d'une part une simplification de montage du fait que les fixations des organes deviennent inutiles et d'autre part un gain de poids non négligeable.

Pour son montage, la pièce-support comporte des zones d'appui 11 sur les longerons supérieur 8 et inférieur 12 du véhicule, ainsi qu'une zone 13 de fixation à une traverse 14 réunissant les deux pièces-support situées à l'avant du véhicule.

On voit que la pièce-support selon ce mode de réalisation permet de supprimer toutes les pièces-support, et notamment celles munies de fixations glissantes, qui seraient nécessaires pour maintenir de façon traditionnelle l'aile avant du véhicule, l'extrémité de son pare-chocs, les optiques de phares, le réservoir de fluide et la batterie électrique.

Ayant supprimé toutes ces pièces-support, on autorise ainsi une dilatation vers l'avant de l'ensemble constitué par le pare-chocs, l'aile avant et les optiques de phares, en optimisant les jeux d'accostage entre eux.

La rigidité de la pièce-support est répartie de façon inégale entre sa zone d'impacts 2, constituée par sa partie inférieure correspondant au pare-chocs, et ses zones comportant des aménagements 10 constituées par sa partie supérieure.

Ainsi, la zone d'impacts 2 est renforcée de manière à pouvoir résister à des chocs en coin contre un obstacle et absorber ces chocs, la partie supérieure de la pièce-support se déformant alors pour soustraire à l'obstacle les optiques de phares ainsi que les organes logés dans le compartiment, lesquels sont ainsi maintenus à l'abri de toute détérioration.

En d'autres termes, la déformation de la pièce-support en cas de chocs est programmée par sa structure.

Dans le même but, les zones d'appui 11 sur les longerons du véhicule sont fusibles, c'est-à-dire qu'elles se cassent en cas de choc, au-delà d'une certaine énergie, avant que la pièce-support ne soit elle-même endommagée.

Du fait que la pièce-support selon l'invention est réalisée en matière plastique, son coefficient de dilatation est assez voisin de celui des éléments de carrosserie en matière plastique.

Pour cette raison, la pièce-support selon l'invention permet d'absorber une partie du différentiel de dilatation existant entre le châssis du véhicule et les éléments de carrosserie en matière plastique.

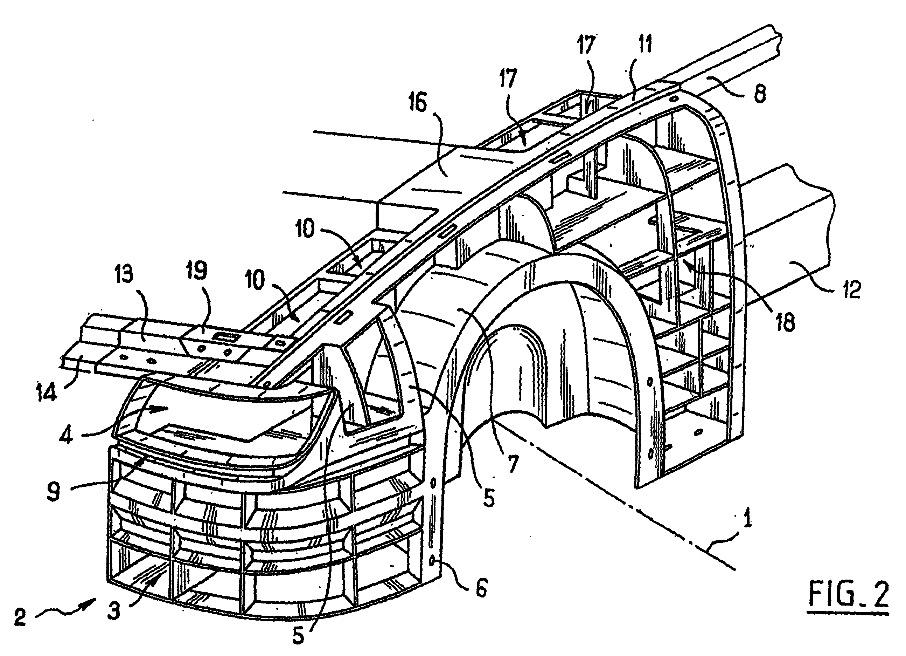

Dans le mode de réalisation de la figure 2, la pièce-support s'étend depuis la portière avant du véhicule jusqu'au bord intérieur des optiques de phares.

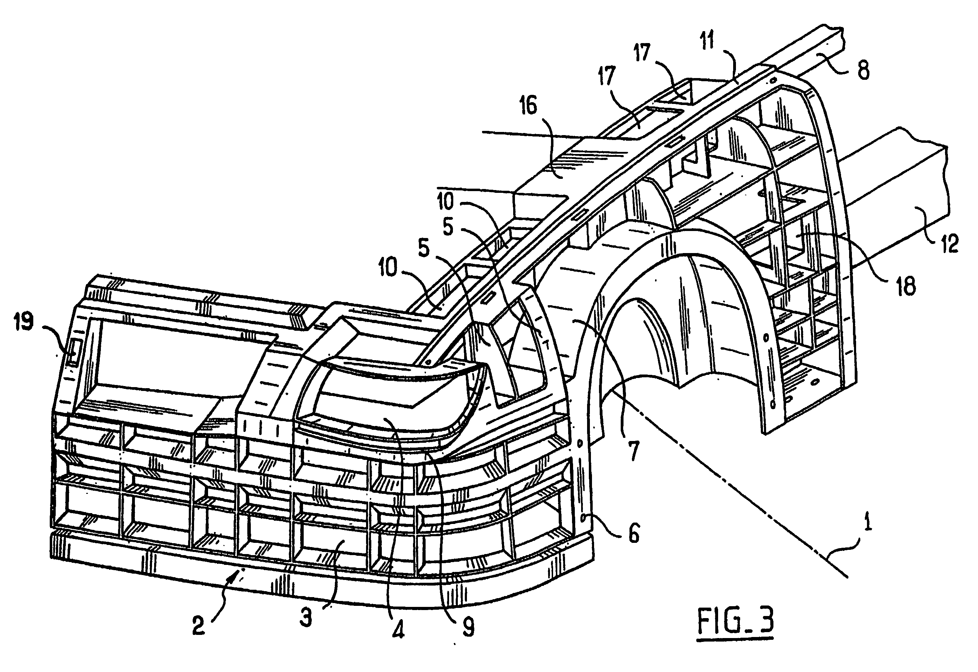

Dans le mode de réalisation de la figure 3, elle s'étend jusqu'au voisinage du plan médian longitudinal vertical du véhicule.

Ces pièces-support peuvent assurer la mise en référence de l'aile, du capot et du auvent du véhicule, en plus de celle de l'aile et du pare-chocs.

Des logements supplémentaires 17 sont prévus du côté du compartiment moteur, de part et d'autre de la chapelle 16 qui supporte les amortisseurs.

D'autres boîtiers 18 sont aménagés, par exemple pour recevoir des filtres d'un système de climatisation du véhicule.

En plus des logements et conduits précédemment décrits, on pourrait également prévoir de réaliser des chemins ou systèmes de fixation de câbles dans la pièce-support pour faciliter l'acheminement de conducteurs électriques et éventuellement optiques répartis dans le compartiment moteur.

Dans le mode de réalisation de la figure 2, on voit que la zone 13 de raccordement à la traverse qui s'étend entre les deux pièces-support, à l'avant du véhicule, comprend un insert métallique 19 formant une serrure et/ou un élément de retenue de sécurité pour le capot.

Dans le mode de réalisation de la figure 3, l'insert métallique 19 est placé à l'extrémité avant de la pièce-support, au voisinage du plan médian longitudinal vertical du véhicule.

Dans cette version, la pièce-support est assujettie au tablier 20 du véhicule, le tablier étant le panneau qui sépare l'habitacle du compartiment moteur.

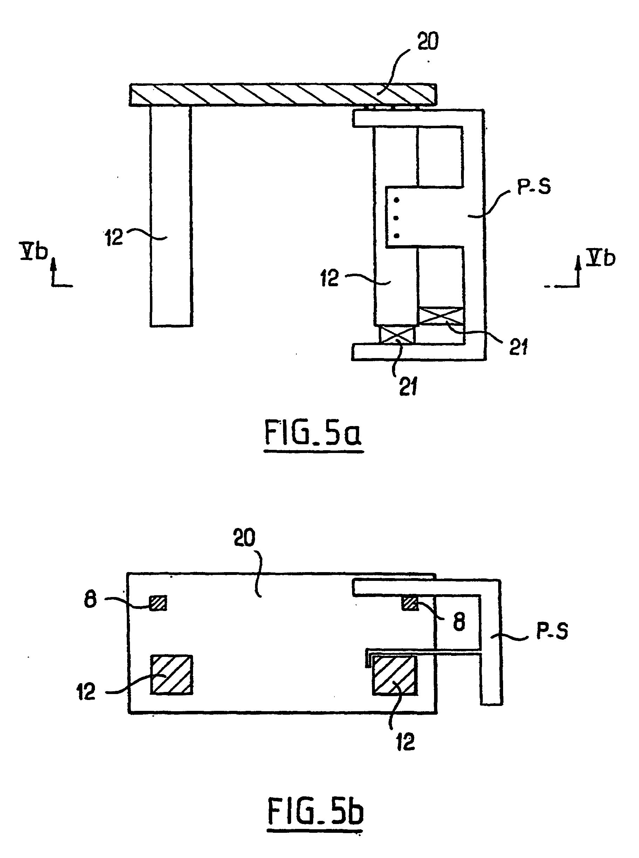

On a représenté, sur les figures 5a et 5b, un schéma montrant les points de fixation de la pièce-support (désignée P-S sur cette figure) sur le tablier et sur les longerons du véhicule.

On voit notamment qu'à l'avant et sur le côté du longeron inférieur, sont prévus des éléments d'absorption 21 réversibles ou non, voire fusibles, aptes à transmettre à ce longeron inférieur l'énergie d'un choc reçu par le pare-chocs et/ou par la traverse et répercuté par la zone d'impacts de la pièce-support.

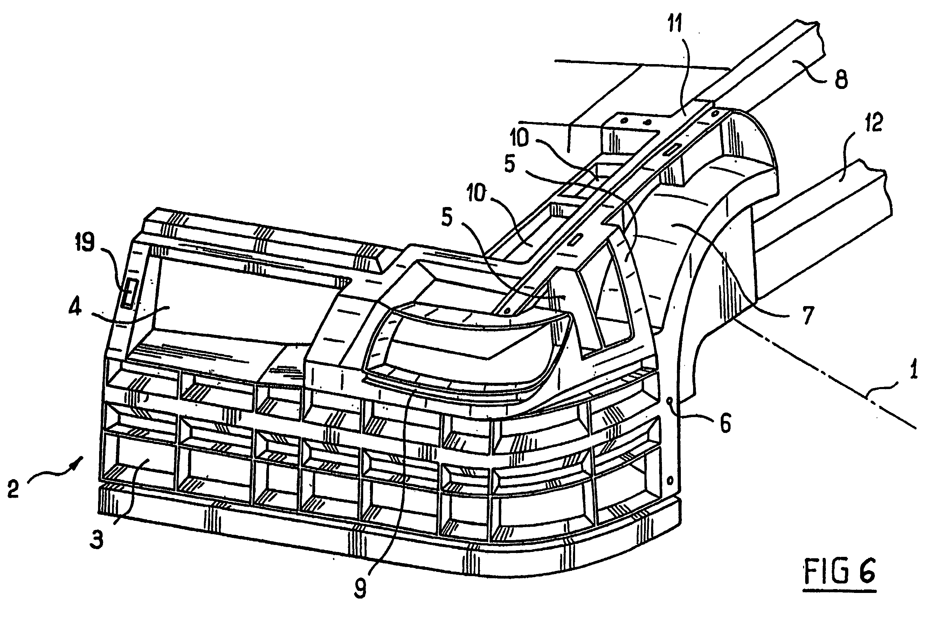

Dans le mode de réalisation de la figure 6, la pièce-support s'étend depuis l'axe des roues avant jusqu'au plan médian longitudinal vertical du véhicule.

Les figures suivantes se composent chacune d'une vue en élévation 7B à 11B de l'avant d'un véhicule et d'une représentation schématique 7A à 11A en vue de dessus de l'avant du véhicule.

Sur les vues en élévation 7B à 11B, on voit l'aile avant gauche 22, un bloc optique 23, le pare-brise 24, le capot 25 du compartiment moteur 26 et la trappe 27 d'un auvent 28.

Le auvent est situé à l'arrière du compartiment moteur, à la base du pare-brise. Il peut être constitué par une pièce-support selon l'invention, qui supporte des organes rendus accessibles par la trappe.

Sur les vues de dessus 7A à 11A, on a représenté en outre les chapelles 16, supportant les amortisseurs, les balais d'essuie-glace 29 et le groupe moto-propulseur 30.

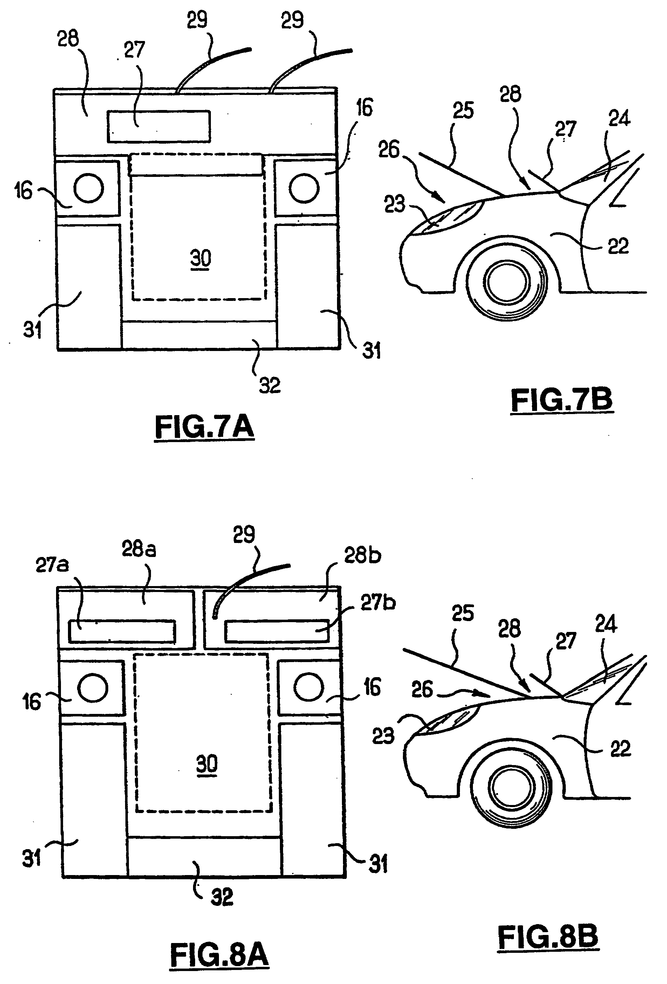

Dans le mode de réalisation des figures 7A et 7B, le compartiment moteur comprend deux quarts-avant 31 du type de celui de la figure 1, une face avant technique 32 et un auvent 28 muni d'une trappe 27.

Le tableau I indique la répartition des organes dans les différentes pièces-support.

Dans le mode de réalisation des figures 8A et 8B, le auvent est divisé en deux demi-auvents 28a et 28b munis chacun d'une trappe d'accès 27a et 27b et la répartition des organes est différente.

Le tableau II indique la répartition des organes dans les différentes pièces-support.

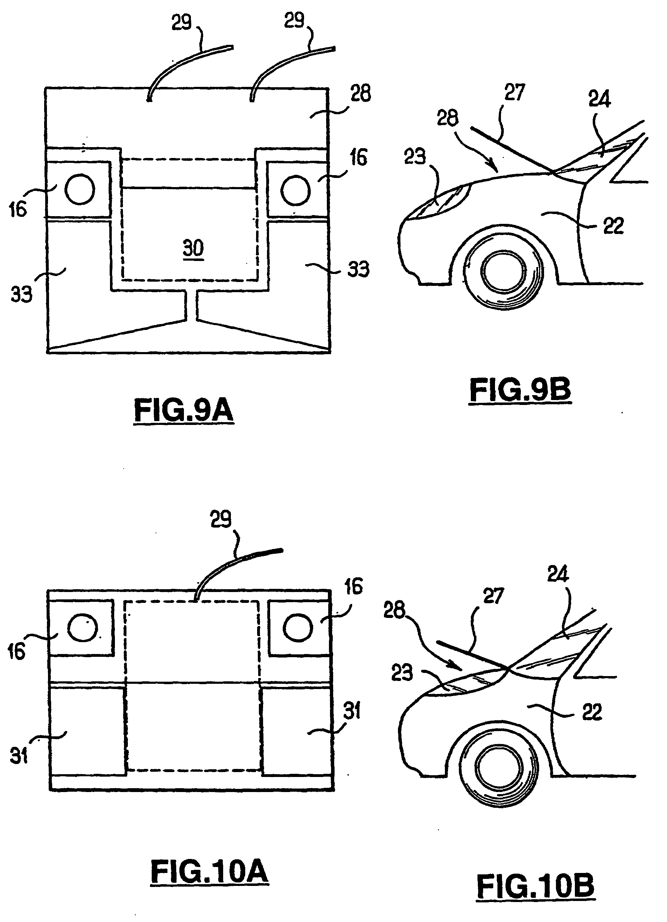

Dans le mode de réalisation des figures 9A et 9B, le compartiment moteur 26 comprend deux blocs latéraux 33 qui s'étendent à l'avant jusqu'au voisinage du plan médian longitudinal vertical du véhicule, comme ceux de la figure 3, et un auvent 28 muni d'une trappe 27 qui constitue le seul ouvrant du compartiment moteur étant donné que le capot est démontable mais dépourvu de charnières.

Le tableau III indique la répartition des organes dans différentes pièces-support.

Dans le mode de réalisation des figures 10A et 10B, le compartiment moteur 26 est plus petit et les deux blocs latéraux précédents sont remplacés par des quarts-avant 31. Il s'agit d'un véhicule de type urbain.

Comme précédemment, seule la trappe 27 du auvent 28 constitue un ouvrant, le capot moteur étant seulement démontable.

Le tableau IV indique la répartition des organes dans les différentes pièces-support.

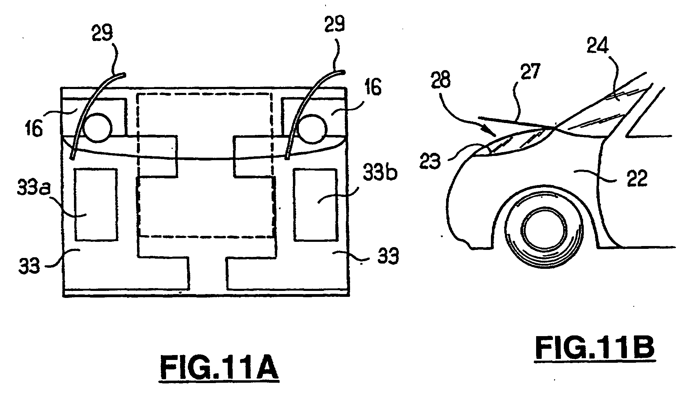

Dans le mode de réalisation des figures 11A,11B, qui correspond à un véhicule de type monospace, seuls sont prévus deux blocs latéraux 33 comportant chacun une trappe 33a, 33b, le capot moteur étant, là encore, seulement démontable. On remarque que le pare-brise 24 s'étend au-delà des chapelles 16.

Le tableau V indique la répartition des organes dans les différentes pièces-support.

Il est bien entendu que les modes de réalisation qui viennent décrits ne présentent aucun caractère limitatif et qu'ils pourront recevoir toutes modifications désirables sans sortir pour cela du cadre de l'invention.

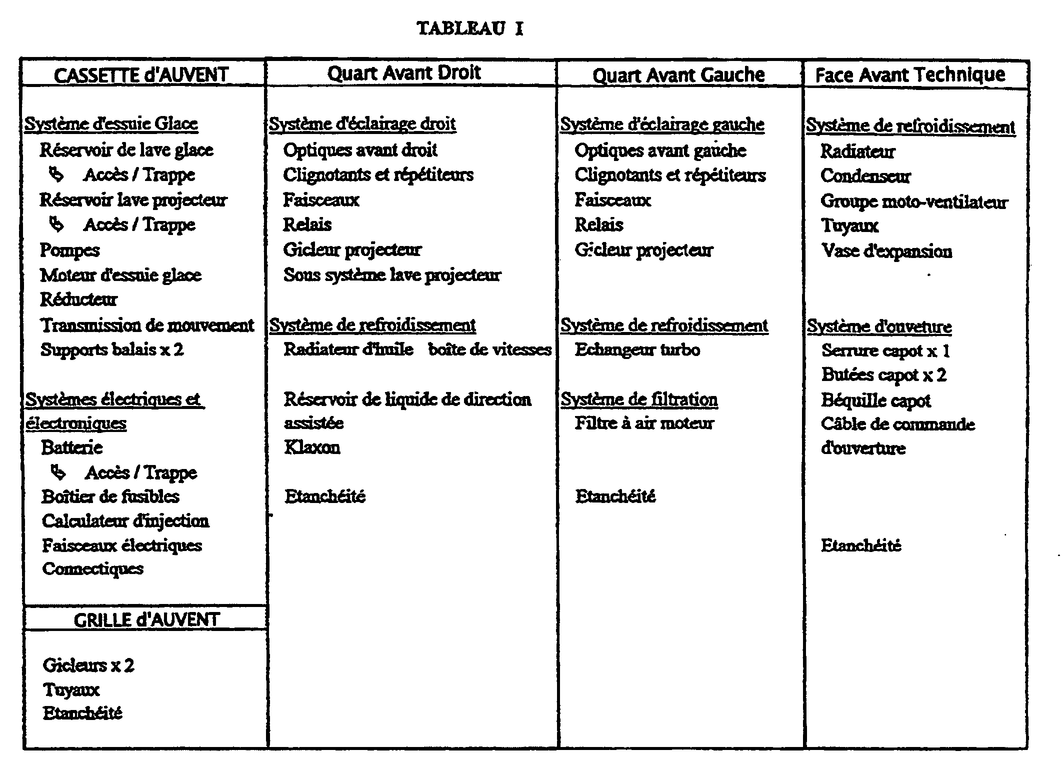

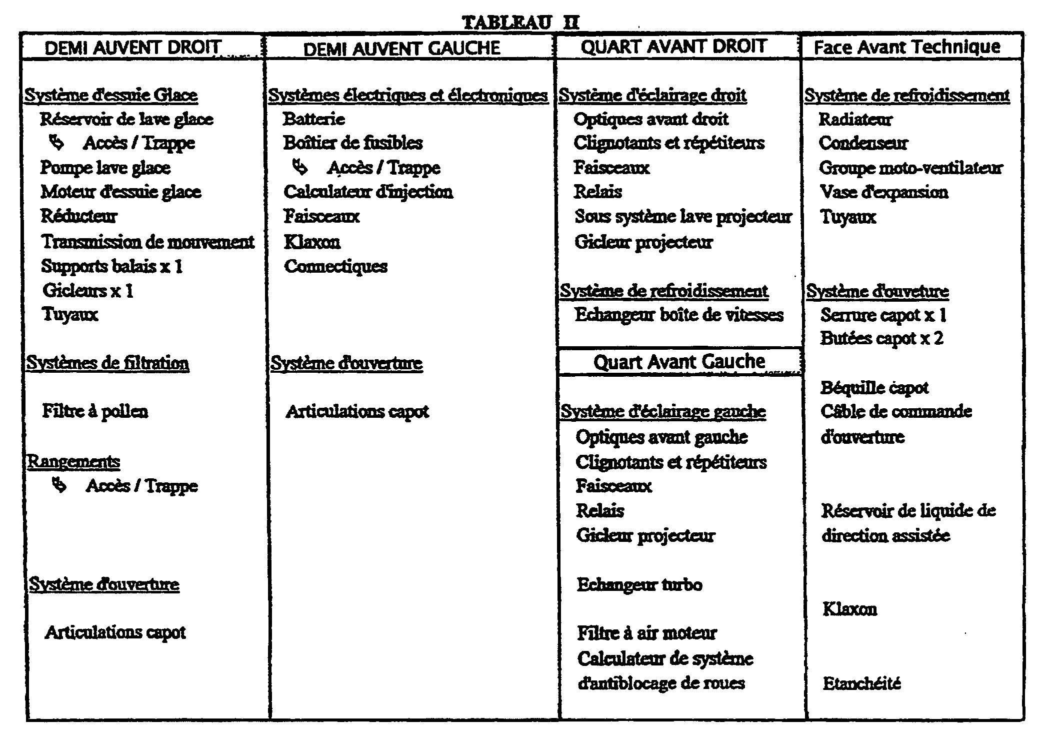

**TABLEAU III**

| AUVENT | Demi Avant Droit | Demi Avant Gauche |
|---|---|---|
| Système d'essuie Glace | Système d'éclairage droit | Système d'éclairage gauche |
| Réservoir de lave glace | Optiques avant droit | Optiques avant gauche |
| Pompes lave glace | Clignotants et répétiteurs | Clignotants et répétiteurs |
| Moteur d'essuie glace | Faisceaux | Faisceaux |
| Réducteur | Relais | Relais |
| Transmission de mouvement | Sous système lave projecteur | Gicleur projecteur |
| Supports balais x 2 | Gicleur projecteur | |
| Gicleurs x 2 | | |
| Tuyaux | Système de refroidissement | Système de refroidissement |
| | Radiateur | Condenseur |
| Systèmes électriques et électroniques | Groupe moto-ventilateur | Groupe moto-ventilateur |
| Batterie | Vase d'expansion | Echangeur turbo |
| Boîtier de fusibles | Echangeur boîte de vitesses | Tuyaux |
| Calculateurs d'injonction et de système d'anti-blocage de roues | Tuyaux | Etanchéité |
| Faisceaux | Réservoir de liquide de direction assistée | |
| Connectiques | | |
| Klaxon | | |
| | | |
| Système d'ouverture | Etanchéité | |
| Serrure auvent x 1 | | |
| Articulations d'auvent | | |
| Béquille d'auvent | | |
| Câble de commande d'ouverture | | |
| | | |
| Système de filtration | | |
| Filtre à pollen | | |
| Filtre à air moteur | | |

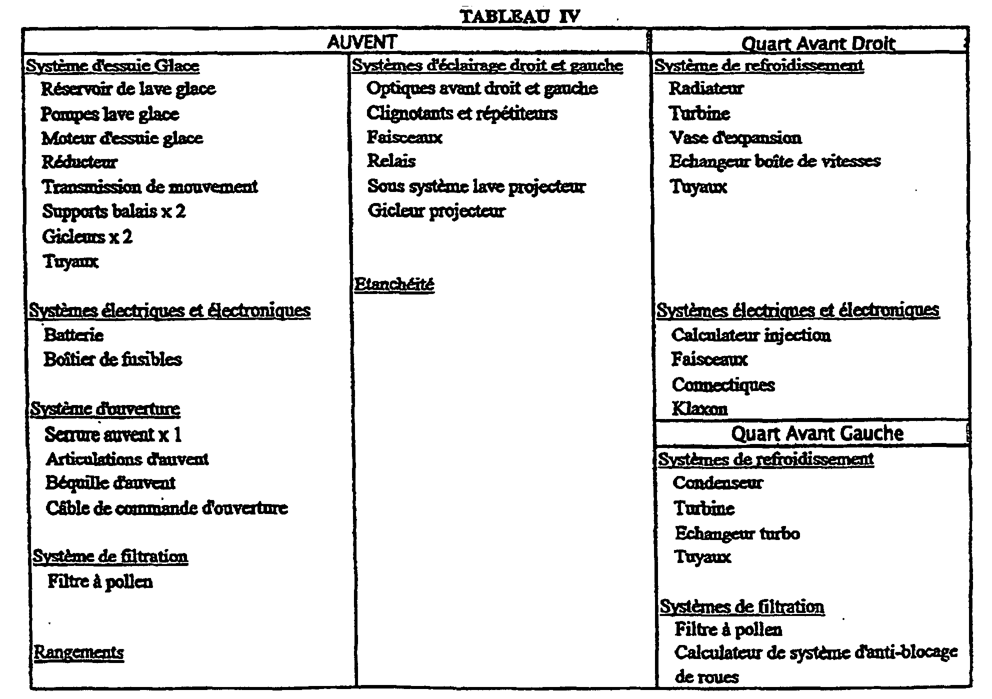

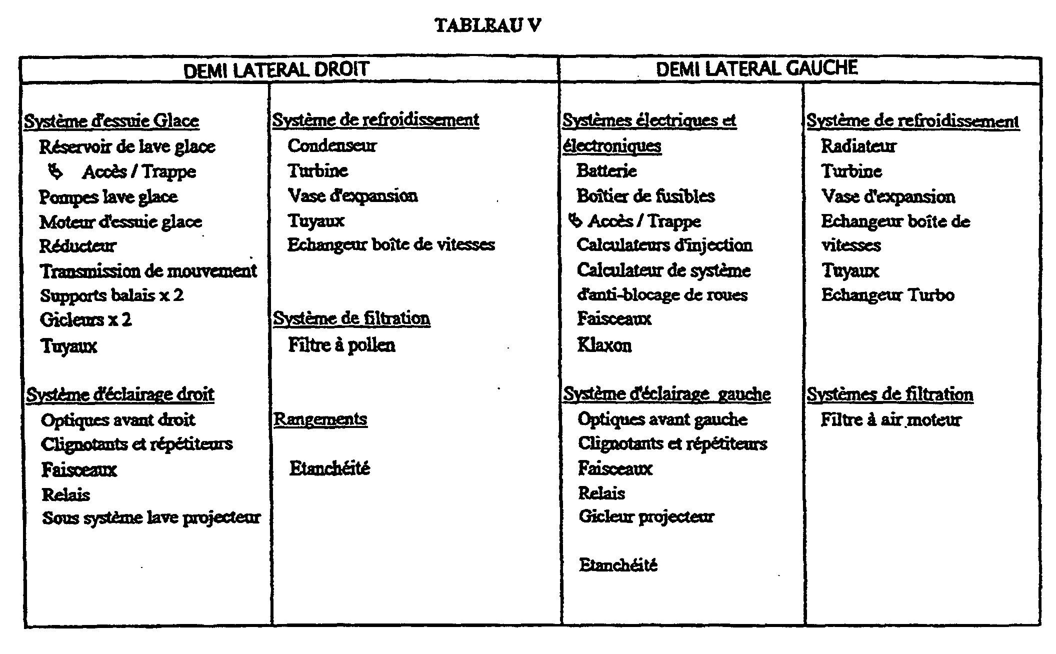

## Revendications

1. Pièce-support pour éléments de carrosserie, destinée à être fixée sur le châssis d'un véhicule automobile, entourant un compartiment dudit véhicule automobile, présentant, du côté du ou des éléments de carrosserie, une structure renforcée dont l'enveloppe est apte à épouser sensiblement la forme intérieure du ou des éléments de carrosserie pour les supporter et comportant, du côté du compartiment, des aménagements (10,17) pour installer des organes destinés à être logés à l'intérieur dudit compartiment, **caractérisée par le fait qu'**elle s'étend au maximum jusqu'au plan médian longitudinal du véhicule.

2. Pièce-support selon la revendication 1, **caractérisée par le fait qu'**elle est réalisée d'un seul tenant.

3. Pièce-support selon la revendication 1, **caractérisée par le fait qu'**elle est réalisée par assemblage d'un nombre minimum de sous-ensembles.

4. Pièce-support selon l'une quelconque des revendications 1 à 3, **caractérisée par le fait qu'**elle comporte des moyens de liaison (9) rapportés ou intégrés, d'éléments de carrosserie voisins, par exemple l'aile et le pare-chocs avant du véhicule, de préférence au voisinage des optiques de phares du véhicule.

5. Pièce-support selon la revendication 4, **caractérisée par le fait que** les moyens de liaison (9) assurent la gestion des jeux d'accostage et des dilatations différentielles des éléments de carrosserie.

6. Pièce-support selon l'une quelconque des revendications 1 à 5, **caractérisée par le fait qu'**elle est réalisée en matière plastique.

7. Pièce-support selon l'une quelconque des revendications 1 à 6, **caractérisée par le fait qu'**elle est réalisée à partir d'une association de matériaux, choisis de manière à accroître la rigidité de la pièce-support et permettre une bonne gestion des dilatations différentielles entre les éléments de carrosserie.

8. Pièce-support selon l'une quelconque des revendications 1 à 7, **caractérisée par le fait qu'**elle présente un différentiel de rigidité entre différentes parties de manière qu'en cas de choc contre un obstacle, la pièce-support se déforme en maintenant les organes en permanence en retrait de l'obstacle.

9. Pièce-support selon l'une quelconque des revendications 1 à 8, **caractérisée par le fait qu'**elle est munie de fixations fusibles qui, en cas de choc, cèdent avant que ladite pièce-support ne se casse, ce qui permet un déplacement de la pièce-support par rapport au châssis du véhicule et une mise en contact direct dudit châssis avec l'obstacle.

10. Pièce-support selon l'une quelconque des revendications 1 à 9, **caractérisée par le fait qu'**elle est destinée à occuper un coin du véhicule, notamment un coin avant.

11. Pièce-support selon l'une quelconque des revendications 1 à 10, **caractérisée par le fait qu'**elle s'interrompt le long du bord intérieur des optiques de phares.

12. Pièce-support selon l'une quelconque des revendications 1 à 10, **caractérisée par le fait qu'**elle s'étend jusqu'au plan médian longitudinal vertical du véhicule.

13. Pièce-support selon l'une quelconque des revendications 1 à 12, **caractérisée par le fait qu'**elle est agencée pour recevoir des organes appartenant à un même système fonctionnel.

## Patentansprüche

1. Stützstück für Karosserieelemente, das dazu bestimmt ist, auf dem Gehäuse eines Kraftfahrzeugs befestigt zu werden und einen Sitzraum des besagten Kraftfahrzeugs umgibt, das auf der Seite des Karosserieelements oder der Karosserieelemente eine verstärkte Struktur aufweist, deren Ummantelung geeignet ist, deutlich die innere Form des Karosserieelements oder der Karosserieelemente anzunehmen, um sie zu stützen, und auf der Seite des Sitzraumes Fassungen (10, 17) umfassend, um Organe einzubauen, die dazu bestimmt sind, im Innern besagten Sitzraums untergebracht zu werden, **dadurch gekennzeichnet, daß** es sich maximal bis zu mittleren Längsebene des Fahrzeugs erstreckt.

2. Stützstück gemäß Anspruch 1, **dadurch gekennzeichnet, daß** es in einem Stück realisiert ist.

3. Stützstück gemäß Anspruch 1, **dadurch gekennzeichnet, daß** es durch Zusammenbau einer Mindestanzahl von Teilsystemen realisiert ist.

4. Stützstück gemäß Anspruch 1 bis 4, **dadurch gekennzeichnet, daß** es zusammengesetzte oder eingebaute Verbindungsmittel (9), von benachbarten Karosserieelementen, zum Beispiel den Kotflügel und die vordere Stoßstange des Fahrzeuges, bevorzugt in der Nähe der Scheinwerfer des Fahrzeugs umfaßt.

5. Stützstück gemäß Anspruch 4, **dadurch gekennzeichnet, daß** die Verbindungsmittel (9) die Steuerung der Kopplungsspiele und der Differentialdilatationen der Karosserieelemente erlauben.

6. Stützstück gemäß Anspruch 1 bis 5, **dadurch gekennzeichnet, daß** es aus Plastikmaterial realisiert ist.

7. Stützstück gemäß Anspruch 1 bis 6, **dadurch gekennzeichnet, daß** es aus einer Vereinigung von Materialien realisiert ist, die derart ausgewählt sind, daß die Festigkeit des Stützstücks erhöht wird und eine gute Steuerung der Differentialdilatationen zwischen den Karosserieelementen ermöglicht wird.

8. Stützstück gemäß Anspruch 1 bis 7, **dadurch gekennzeichnet, daß** es ein Festigkeitsdifferential zwischen den verschiedenen Teilen derart aufweist, daß sich das Stützstück bei einem Aufprall gegen ein Hindernis verformt und dabei die Organe ständig vom Hindernis weghält.

9. Stützstück gemäß Anspruch 1 bis 8, **dadurch gekennzeichnet, daß** es mit schmelzbaren Befestigungen versehen ist, die bei einem Aufprall nachgeben, bevor besagtes Stützstück bricht, was eine Verschiebung besagten Stützstücks im Verhältnis zum Gehäuse des Fahrzeugs und einen direkten Kontakt besagten Gehäuses mit dem Hindernis erlaubt.

10. Stützstück gemäß Anspruch 1 bis 9, **dadurch gekennzeichnet, daß** es dazu bestimmt ist, einen Winkel des Fahrzeugs einzunehmen, insbesondere einen vorderen Winkel.

11. Stützstück gemäß Anspruch 1 bis 10, **dadurch gekennzeichnet, daß** es entlang des inneren Randes der Scheinwerfer unterbrochen wird.

12. Stützstück gemäß Anspruch 1 bis 10, **dadurch gekennzeichnet, daß** es sich bis zur vertikalen mittleren Längsebene des Fahrzeugs erstreckt.

13. Stützstück gemäß Anspruch 1 bis 12, **dadurch gekennzeichnet, daß** es angeordnet ist, um Organe aufzunehmen, die zu einem selben Funktionssystem gehören.

## Claims

1. Support-part for bodywork elements to be fixed on the chassis of a motor vehicle and surrounding a compartment of said motor vehicle and having on the side of the bodywork element(s), a reinforced structure whose casing is adapted to approximately fit the internal shape of said bodywork element(s) so as to support said elements and comprising, on the side of the compartment, fixtures (10, 17) for installing elements to be housed inside said compartment, **characterised by** the fact that it extends at the most to the median longitudinal plane of the vehicle.

2. Support-part according to claim 1, **characterised by** the fact that it is made up of a single piece.

3. Support-part according to claim 1, **characterised in that** it is made up by assembling a minimum number of sub-assemblies.

4. Support-part according to one of claims 1 to 3, **characterised by** the fact that it comprises integrated or mounted linking means of adjacent bodywork elements, for example, the wing and the front bumper of the vehicle and preferably close to the optical headlights of the vehicle.

5. Support-part according to claim 4, **characterised by** the fact that the linking means (9) ensure control of the approaching clearances and differential expansions of the bodywork elements.

6. Support-part according to one of claims 1 to 5, **characterised by** the fact that it is made up of a plastic material.

7. Support-part according to one of claims 1 to 6, **characterised by** the fact that it is made up by associating materials which have been selected so as to increase the rigidity of the support-part and allowing proper control of the differential expansions between the bodywork elements.

8. Support-part according to one of claims 1 to 7, **characterised by** the fact that it has a rigidity differential between various portions so that in the event of any impact against an obstacle, the support-part warps, so as to keep the components permanently away from the obstacle.

9. Support-part according to one of claims 1 to 8, **characterised by** the fact that it is equipped with fuse fixings which, in the event of an impact, gives way before said support-part breaks, thus enabling the support-part to move with respect to the chassis of the vehicle and enabling said chassis to be placed in direct contact with the obstacle.

10. Support-part according to one of claims 1 to 9, **characterised by** the fact that it is intended to occupy a corner of the vehicle, especially a front corner.

11. Support-part according to one of claims 1 to 10, **characterised by** the fact that it interrupted along the internal edge of the optical headlights.

12. Support-part according to one of claims 1 to 10, **characterised by** the fact that it extends as far as the vertical longitudinal median plane of the vehicle.

13. Support-part according to one of claims 1 to 12, **characterised by** the fact that it is arranged so as to receive elements belonging to a same operational system.
